# FASCICULE DE BREVET EUROPEEN

(11) **EP 2 886 924 B1**
(45) Date de publication et mention de la délivrance du brevet: **30.10.2019**
(21) Numéro de dépôt: 14195513.8
(22) Date de dépôt: 28.11.2014
(51) Int. Cl.: F16L 33/22

(54) **Douille d'accroche pour raccord et raccord avec une telle douille**
Klemmhülse für Anschluss, und Anschluss mit einer solchen Hülse
Gripping socket for connector and connector with such a socket

(30) Priorité: 20.12.2013 FR 1363160
(43) Date de publication de la demande: 24.06.2015
(73) Titulaire: Raccords et Plastiques Nicoll, 49300 Cholet (FR)
(72) Inventeur: Queneherve, Sarah, 44000 Nantes (FR); Berger, Willy, 44000 Nantes (FR)
(74) Mandataire: 24 IP Law Group France

(56) Documents cités:
- EP-A1- 0 219 418
- EP-A1- 0 509 899
- EP-A1- 1 104 866
- EP-A1- 1 835 220
- DE-A1- 10 158 114
- DE-A1-102011 085 398
- US-A- 3 073 628
- US-A- 3 838 592

## Description

La présente invention concerne le domaine des raccords, en particulier de canalisations pour le transport de fluide. Plus précisément, la présente invention concerne un procédé de raccordement d'un raccord avec un élément de tube.

Différents procédés de raccordement et types de raccord existent pour le raccordement de canalisations dans les bâtiments et réseaux (voir par exemple le document US 3073628).

Un objet de la présente invention est un procédé permettant un montage à blanc, c'est-à-dire permettant à un installateur de valider et de vérifier la connexion avant le sertissage du raccord.

Un autre objet de la présente invention est de fournir un raccord simple, facile à produire et économique.

A cet effet, l'invention propose un élément de douille pour raccord d'élément de tube, comprenant un corps d'élément de douille, avec une partie de fixation de tube avec une extrémité longitudinale d'insertion pour élément de tube, et une partie de montage, à distance longitudinale de l'extrémité d'insertion, et avec une face interne d'extrémité longitudinale. La partie de fixation de tube comprend au moins un élément d'accroche de tube, l'élément d'accroche de tube faisant saillie de la partie de fixation de tube avec un bord libre faisant face à la partie de montage.

Ainsi, la présente invention prévoit un bord libre faisant face à ou orienté vers la partie de montage et plus précisément une face interne d'extrémité longitudinale, ou autrement dit, un espace sans matière entre un bord de l'élément d'accroche et la partie de montage. La présente invention prévoit donc un élément d'accroche qui fait saillie non pas de la partie de montage, axialement ou longitudinalement vers l'extérieur, mais qui fait saillie de la partie de fixation de tube, en direction sensiblement axiale vers l'intérieur ou en direction de la partie de montage ou proche mais à distance de la partie de montage en direction sensiblement circonférentielle. Un avantage est que le risque de déformation de l'élément d'accroche lors de l'insertion d'un tube est quasiment inexistant, le bord libre ou l'extrémité libre de l'élément d'accroche orienté non pas vers l'extrémité d'insertion de tube mais vers la partie de montage de l'élément de douille, ne faisant pas obstacle à un tube qui est inséré. De plus, une bonne résistance mécanique peut être obtenue.

Dans un mode de réalisation, la partie de montage sur raccord comprend une surface interne pouvant former butée axiale interne. En prévoyant une surface de butée, une isolation diélectrique peut être obtenue entre un tube inséré dans un raccord comportant un tel élément de douille et un corps de raccord, par exemple en laiton.

Dans un mode de réalisation, le au moins un élément d'accroche de tube est une languette ou patte flexible, avec une surface interne d'accroche présentant un profil apte à pénétrer dans une couche extérieure du tube. Une languette flexible permet d'obtenir un élément d'accroche mobile d'une position de repos, dans laquelle la languette est sensiblement sans contrainte, à une position d'accroche autrement appelée position verrouillée, dans laquelle la languette est déformée, en particulier fléchie, sous pression, avec le profil interne en engagement dans le tube. Ainsi, un montage à blanc est rendu possible, en position de repos de la languette.

Selon un mode de réalisation, le au moins un élément d'accroche de tube comprend une surface externe avec au moins un profil, par exemple du type chanfrein ou avec des arrondis. Des éléments de type chanfrein peuvent servir de guidage pour un élément de pression venant appuyer sur l'élément d'accroche, par exemple par un mouvement de rotation ou de translation axiale de l'élément de pression.

De manière avantageuse, la partie de fixation de tube comprend une zone de jonction axiale entre la partie de montage et la partie d'extrémité d'insertion, la zone de jonction étant plus rigide que le au moins un élément d'accroche. En prévoyant une zone de jonction plus rigide, la solidité de l'élément de douille est améliorée, ce qui peut également participer à la tenue d'un raccord avec l'élément de douille.

Dans un mode de réalisation, le bord libre de l'élément d'accroche est un bord d'extrémité de l'élément d'accroche faisant saillie, c'est-à-dire que l'élément d'accroche a une étendue axiale, l'extrémité libre de la languette venant en vis-à-vis de la face interne d'extrémité longitudinale. Autrement, le bord libre de l'élément d'accroche peut être un bord latéral de l'élément d'accroche faisant saillie, c'est-à-dire que l'élément d'accroche a une étendue sensiblement circonférentielle.

De manière avantageuse, le corps d'élément de douille comprend en outre des moyens de guidage pour le positionnement du corps d'élément de douille sur un corps de raccord, en particulier une rainure de guidage.

En prévoyant des éléments de fixation avec un élément de douille identique ou similaire, on peut former une douille à partir de deux ou plusieurs éléments de douille, facilement assemblable sur un raccord. Autrement, l'élément de douille peut former une douille. Dans ce cas, il est possible de prévoir des moyens de clipsage de douille pour le montage de la douille sur un raccord. Dans un mode de réalisation particulièrement préféré, les éléments de douille sont des demi-coquilles de douille. Des demi-douilles permettent d'avoir une production simplifiée des éléments de douille, par exemple par injection dans un même moule, tout en assurant ensuite un assemblage facile sur un raccord, par exemple en utilisant des moyens de guidage type rainure annulaire.

La présente divulgation concerne également une douille comprenant au moins un élément de douille assemblé et un raccord comprenant au moins un élément de douille. Le raccord selon l'invention comprend également un corps de raccord, le au moins un corps d'élément de douille étant monté sur le corps de raccord, et un élément de verrouillage assemblé/positionné sur le au moins un élément de douille, dans lequel l'élément de verrouillage est apte à passer d'une position de repos, dans laquelle l'élément de verrouillage est assemblé sur le au moins un élément de douille sans déformation sensible du au moins un élément d'accroche de tube, à une position de verrouillage, dans lequel l'élément de verrouillage appuie radialement sur le au moins un élément d'accroche de tube, de sorte que le au moins un élément d'accroche de tube est déformé vers le centre du raccord, en position dite alors verrouillée.

Dans un mode de réalisation, l'élément de verrouillage comprend au moins deux créneaux de pression pour interagir avec au moins deux éléments d'accroche respectifs. De préférence, les au moins deux créneaux de pression sont dimensionnés pour pouvoir être intercalés, en position de repos, entre les au moins deux éléments d'accroche. Ainsi, un raccord peut être obtenu, dans lequel la position de repos est facilement identifiable et permettant un montage à blanc dans lequel aucune pression n'est exercée sur les éléments d'accroche.

Dans un mode de réalisation, l'élément de verrouillage comprend un corps de verrouillage assemblé/positionné sur les au moins un élément de douille et au moins une languette faisant saillie axialement côté extrémité d'insertion de tube. Une languette axiale côté tube permet d'absorber les contraintes mécaniques liées aux variations de tube. Il est aussi possible de masquer les zones de raccord entre les éléments de douille, le cas échéant.

La présente invention propose un procédé de raccordement d'un raccord avec un élément de tube, comprenant les étapes d'insertion d'un élément de tube dans un raccord selon l'invention, l'élément de verrouillage étant en position de repos et faire passer l'élément de verrouillage en position de verrouillage afin que le au moins un élément d'accroche de tube vienne en engagement dans l'élément de tube.

Grâce au procédé de l'invention, un montage à blanc est possible, permettant à l'installateur de vérifier les connexions avant le verrouillage de celles-ci, en faisant passer l'élément de verrouillage en position de verrouillage.

De préférence, un mouvement relatif, en particulier une rotation relative de l'élément de verrouillage par rapport audit au moins un élément de douille permet de verrouiller le raccord. Par exemple, une rotation dans la gamme de 5 à 25 degrés est préférée, correspondant à la distance qui doit être parcourue pour faire passer les éléments de pression de l'élément de verrouillage en position d'appui sur les éléments d'accroche de tube. Une rotation inférieure ou égale à un quart de tour est facilement réalisable, même dans des zones difficiles d'accès pour un utilisateur. Par exemple, une rotation de 10 à 20 degrés est plus particulièrement préférée.

De manière avantageuse, le raccordement ainsi réalisé est irréversible, les dents des éléments d'accroche étant en engagement dans la matière du tube, obtenant ainsi un micro-sertissage.

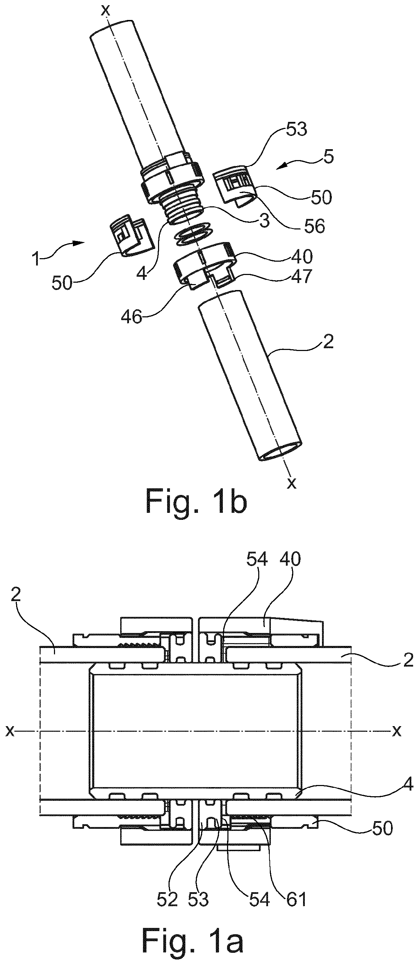

D'autres caractéristiques et avantages de la présente invention ressortiront de la description faite ci-après en référence aux dessins annexés qui en illustrent un exemple de réalisation dépourvu de tout caractère limitatif, parmi lesquels :
- La figure la est une vue en coupe d'un raccord selon un mode de réalisation de l'invention et la figure 1b est vue éclatée d'un raccord de la figure 1a ;
- Les figures 2 et 3 sont des vues d'un élément de douille de dessus et de dessous, selon un mode de réalisation de la présente invention ;
- La figure 4 est une vue d'un élément de douille selon un autre mode de réalisation de la présente invention ;
- La figure 5 est une vue en coupe d'un raccord selon un mode de réalisation de la présente invention ;
- La figure 6 est une vue en coupe d'un élément de verrouillage, selon un mode de réalisation de la présente invention ;
- La figure 7 est une vue en coupe d'un raccord avant verrouillage selon un autre aspect de la présente invention ;
- La figure 8 est une vue en coupe du raccord de la figure 7 après verrouillage selon un aspect de la présente invention ;
- La figure 9 est un schéma de principe d'un procédé de raccord selon la présente invention.

Sur les dessins, des éléments identiques ou similaires sont indiqués avec des numéros de référence identiques ou similaires.

Les figures 1a et 1b illustrent un raccord 1 selon un mode de réalisation de l'invention, pour le raccordement d'éléments de tube 2, canalisations ou autre tuyaux. Le raccord du côté gauche sur la figure la montre le raccord assemblé et verrouillé, en position irréversible, et le raccord du côté droit sur la figure la montre le raccord assemblé avant verrouillage, autour d'un axe longitudinal X-X.

Le raccord 1 comprend un corps de raccord 3, une douille 5 formée par deux éléments de douille 50, et un anneau de verrouillage 40, assemblé sur les éléments 50 de douille, afin de former un ensemble rigide.

Le corps de raccord 3 comprend une partie de support 4, sur laquelle le tube 2 est inséré, et avec une circonférence externe profilée pour le logement de joints d'étanchéité 4. Le corps de raccord 3 peut être par exemple en laiton ou en matière plastique.

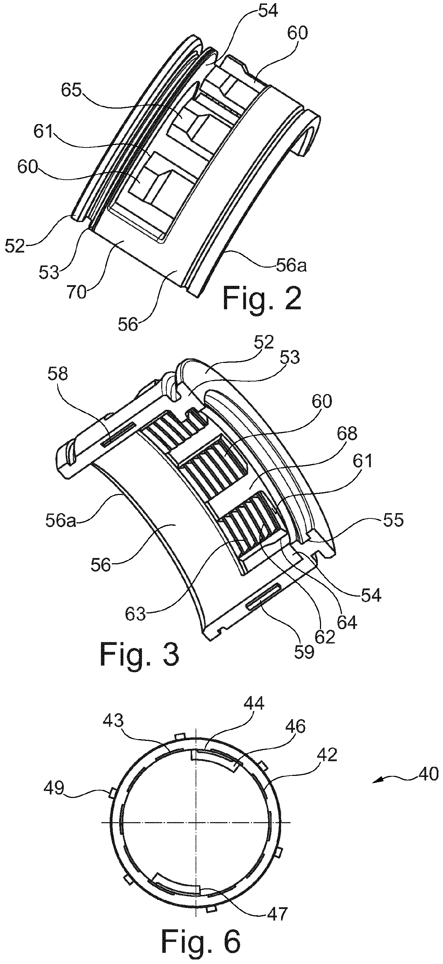

Comme bien vu sur la vue éclatée de la figure 1b, la douille 5 est formée à partir de deux éléments 50 de douille, assemblés ensemble pour former la douille 5. Les éléments de douille sont également illustrés sur les figures 2 et 3.

Les éléments 50 comprennent un corps 52 d'élément de douille de section sensiblement partiellement annulaire, avec des éléments de fixation 58, 59 avec un élément de douille identique ou similaire, afin de former une douille à partir de deux ou plusieurs éléments de douille. Sur la figure 3, les éléments de fixation 58, 59 sont un évidement 58, situé à un bord d'extrémité radiale, prévu pour coopérer avec une saillie 59, située à un bord d'extrémité radiale opposée. Bien entendu, cet exemple d'éléments de fixation n'est pas limitatif et d'autres types de fixation complémentaire sont envisageables. De même, dans l'exemple représenté, les éléments de douille sont des demi-douilles. Cependant, un élément de douille peut former une douille entière, ou au contraire trois ou plus éléments de douille peuvent être nécessaires pour former une douille.

Le corps 52 d'élément de douille comprend une partie de montage sur raccord 53, avec une face interne d'extrémité longitudinale 54, pouvant optionnellement former butée axiale interne pour le tube 2 inséré sur la partie de support 4, lorsque l'élément de douille est en position fonctionnelle sur le corps de raccord.

Une rainure de guidage 55 est prévue pour le guidage et le positionnement de l'élément de douille sur le corps de raccord. La rainure de guidage est partiellement sensiblement annulaire.

A la figure 1, le tube 2 n'est pas en butée contre la face interne 54. L'homme du métier comprendra que, selon les raccords, le tube 2 peut être inséré dans le raccord jusqu'à venir en butée contre la face interne 54, qui peut alors former également une surface écran entre le tube 2 et le corps de raccord 3, de sorte d'empêcher le contact entre l'âme du tube, par exemple en aluminium, et le corps de raccord, par exemple en laiton.

Le corps 52 d'élément de douille comprend également une partie de fixation 56 de tube, comprenant une pluralité d'éléments d'accroche 60 de tube. La partie de fixation 56 comprend une extrémité longitudinale d'insertion 56a pour élément de tube. La partie de montage sur raccord 53 est à distance longitudinale de l'extrémité longitudinale d'insertion 56a.

Les éléments d'accroche 60 sont des languettes flexibles, faisant saillie de la partie de fixation de tube avec un bord axial libre 61 faisant face à la face interne 54. En d'autres termes, il existe un espace libre, sans matière, entre la face interne 54 et le bord axial libre 61. Dans le mode de réalisation des figures 2 et 3, le bord libre 61 est l'extrémité de la languette 60.

Les éléments d'accroche 60 peuvent être régulièrement espacés, avec des espaces libres ou interstices 68 entre les éléments d'accroche 60. Sur les figures 2 et 3, trois éléments d'accroche 60 sont représentés, mais ceci n'est pas limitatif et l'homme du métier peut prévoir plus ou moins d'éléments d'accroche selon la géométrie et les dimensions des raccords et douille. De plus, l'espacement entre les éléments d'accroche est représenté comme étant régulier, mais il est également possible de varier cet espacement d'un élément d'accroche à l'autre.

Les surfaces radiales, interne 62 et externe 64, des languettes 60 sont profilées. La surface interne 62 a un profil avec des dents d'accroche 63, destinées à pénétrer dans une couche extérieure du tube, pour maintenir la connexion du raccord. La surface externe 64 comprend un chanfrein 65, apte à guider l'anneau de verrouillage 40 pour venir en appui sur les languettes 60. D'autres types de profil externe peuvent être envisagés pour la surface externe 64.

Une jonction axiale 70 entre la face interne 54 et la zone de saillie des languettes d'accroche est prévue, plus rigide que les languettes, afin de garantir la bonne résistance du raccord avec douille.

L'élément de douille illustré a une section transverse partiellement annulaire. Bien entendu, ceci n'est pas limitatif et d'autres sections transverses sont possibles, tant que l'élément de douille peut suivre le pourtour du tube. Par exemple, un profil hexagonal peut être envisagé, sur le profil interne, définissant ainsi des zones de pression adéquates pour le verrouillage.

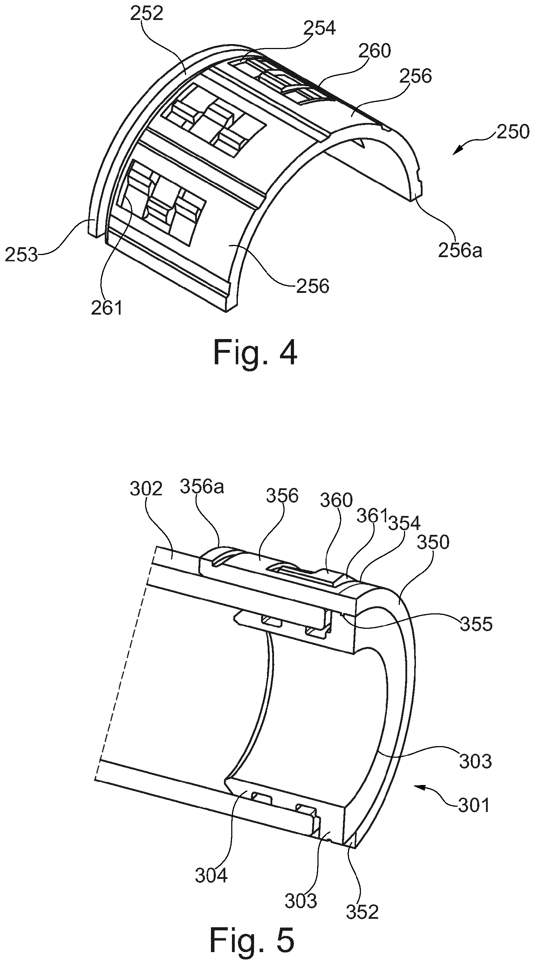

La figure 4 illustre un élément 250 de douille selon un autre mode de réalisation de l'invention. L'élément 250 comprend un corps 252 d'élément de douille avec une partie de montage 253 pour le montage sur un corps de raccord et comprenant une face interne d'extrémité longitudinale 254, et une partie de fixation de tube 256 avec une extrémité longitudinale 256a d'insertion de tube. La face interne 254 est orientée vers la partie de fixation de tube 256. La partie de fixation 256 de tube comprend une pluralité d'éléments d'accroche 260 de tube. Les éléments d'accroche 260 sont des languettes ou pattes flexibles, faisant saillie circonférentiellement de la partie de fixation de tube avec un bord axial libre 261 faisant à la face interne 254. Contrairement au mode de réalisation des figures 2 et 3, dans lesquelles les languettes 60 font saillie axialement vers la face interne 54 et dans lequel le bord libre 61 est l'extrémité axiale de la languette opposée à la zone de jonction des languettes et de la partie de fixation, dans le mode de réalisation de la figure 4, les languettes 260 font saillie selon une étendue circonférentielle et le bord libre 261 est un bord latéral axial, et non pas l'extrémité de la languette.

La figure 5 illustre une coupe d'un raccord 301 comprenant un corps de raccord 300, une douille avec un élément de douille 350, et avec un tube 302 inséré dans le raccord 301.

Le corps de raccord 303 comprend une partie de support 304, sur laquelle le tube 302 est inséré, et avec une circonférence externe profilée pour le logement de joints d'étanchéité. Le corps de raccord 303 peut être par exemple en laiton ou en matière plastique.

L'élément 350 comprend un corps 352 d'élément de douille de section sensiblement partiellement annulaire, avec une face interne d'extrémité longitudinale 354, Une rainure de guidage 355 est prévue pour le guidage et le positionnement de l'élément de douille sur le corps de raccord.

L'élément de douille 350 comprend une partie de fixation 256 de tube, comprenant une pluralité d'éléments d'accroche 260 de tube. Les éléments d'accroche 260 sont des languettes flexibles, faisant saillie axialement de la partie de fixation de tube avec un bord axial libre 361 faisant à la face interne 354. Le bord libre 361 correspond dans ce mode de réalisation à l'extrémité axiale de la languette opposée à la zone de jonction des languettes et de la partie de fixation.

Comme bien vu sur les figures 1 et 6 à 8, l'anneau de verrouillage 40 comporte une surface interne 42 profilée, avec une succession d'évidements 43 et de saillies 44, faisant saillie radialement vers l'intérieur. De préférence, les évidements 43 et saillies 44 sont dimensionnés de sorte que, lorsque l'anneau de verrouillage 40 est assemblé sur les éléments 50 de douille, avant le raccordement, les saillies 44 puissent être positionnées dans les espaces libres ou interstices 68 entre les éléments d'accroche ou languettes 60 des éléments 50 de douille. Dans cette position, les éléments d'accroche 60 sont sensiblement en position parallèle au dessus du tube, librement, sans déformation sensible des éléments d'accroche. En d'autres termes, les éléments d'accroche 60 ne sont pas en position contrainte.

L'anneau de verrouillage 40 comprend au moins une languette 46, 47 faisant saillie axialement côté extrémité d'insertion de tube. Sur le mode de réalisation de la figure 1, deux languettes 46 47 sont prévues. Ces languettes permettent d'augmenter la résistance du raccord à des flexions imposées par le tube 2, mais elles permettent également de dissimuler les zones de fixation entre eux des deux éléments de douille formant douille.

L'élément de verrouillage est également muni sur sa circonférence externe de reliefs 49, pour coopérer avec un outil de verrouillage. Les reliefs peuvent être des prises ou bien des éléments type crémaillères. Ainsi, l'élément de verrouillage 40 peut passer d'une position de repos, dans lequel l'élément de verrouillage maintient les au moins deux éléments de douille en position sur le corps de raccord, à une position de verrouillage, dans lequel l'élément de verrouillage appuie radialement sur le au moins un élément d'accroche de tube, de sorte que le au moins un élément d'accroche de tube est fléchi vers le centre du raccord et les dents d'accroche agrippent le tube.

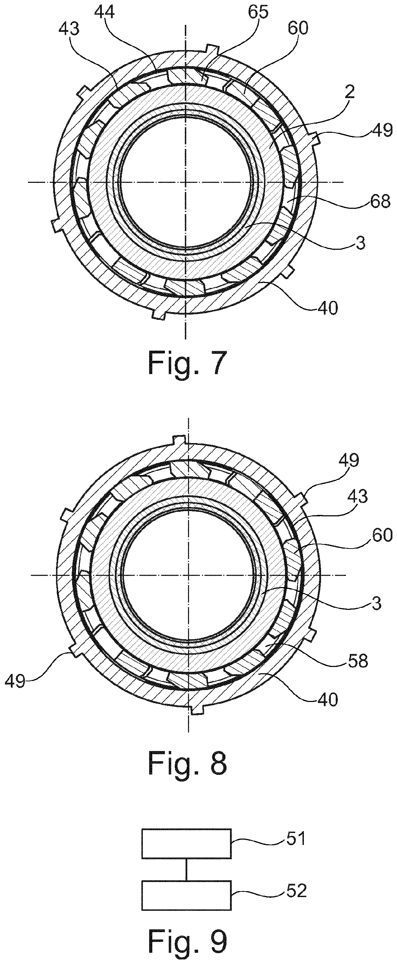

Un procédé de raccordement d'un raccord 1 avec un élément de tube 2 est décrit en référence aux figures 7 à 9.

Dans une première étape S1, un élément de tube 2 est inséré sur le corps de raccord 3. L'insertion peut avoir lieu par exemple jusqu'à ce que l'élément de tube 2 soit en butée axiale contre la face 54 des deux éléments 50 de douille assemblés sur le raccord 1, en butée axiale contre un élément intermédiaire, ou même pas en butée axiale, et/ou jusqu'à ce que la bonne insertion du tube soit repérée par un signal visuel, à l'aide de fenêtres de visualisation par exemple, ou par un signal sonore. Dans cette étape S1, l'élément de verrouillage 40 est en position de repos sur les éléments 50 de douille, c'est-à-dire que les saillies 44 sont positionnées dans les espaces libres ou interstices 68 entre les languettes 60 des éléments 50 de douille. Dans cette position, les éléments d'accroche 60 sont sensiblement parallèles au dessus du tube 2, et ne sont pas en position contrainte. Les éléments d'accroche peuvent affleurer le tube ou être à distance plus importante du tube.

Avantageusement, l'installateur peut désengager le tube en cas d'erreur, sans détériorer l'ensemble, permettant ainsi un montage à blanc.

Dans une deuxième étape S2, l'élément de verrouillage 40 est passé en position de verrouillage, dans laquelle les saillies 44 viennent en appui contre les languettes 60, forçant les languettes en déformation radiale, de façon préférentielle en flexion radiale vers l'intérieur. La pression radiale exercée sur les languettes entraine les dents 63 des languettes 60 en engagement dans la matière extérieure de l'élément de tube 2. En d'autres termes, la deuxième étape S2 résulte en un micro-sertissage du raccord, de manière irréversible.

Dans le mode de réalisation illustré, l'étape de faire passer l'élément de verrouillage en position de verrouillage comprend une rotation relative de l'élément de verrouillage 40 par rapport aux éléments 50 de douille. Préférentiellement la rotation est une rotation d'environ 18 degrés. La gamme de l'angle de rotation dépend du nombre d'éléments d'accroche de tube et de leur géométrie et agencement. Une rotation inférieure à un quart de tour est préférée, pour sa facilité de mise en œuvre, même dans des endroits peu accessibles.

## Revendications

1. Procédé de raccordement d'un raccord avec un élément de tube, comprenant les étapes
- insérer un élément de tube (2) dans un raccord (1), le raccord comprenant
- un corps de raccord (3),au moins un élément de douille (50) comprenant un corps (52 ; 252) d'élément de douille, le au moins un corps d'élément de douille étant monté sur le corps de raccord, et le corps (52) d'élément de douille ayant une partie de fixation (56 ; 256) de tube avec une extrémité longitudinale d'insertion (56a) pour élément de tube, et une partie de montage (53 ; 253) à distance longitudinale de l'extrémité d'insertion, la partie de montage (53 ; 253) ayant une face interne (54 ; 254) d'extrémité longitudinale, dans lequel la partie de fixation (56 ; 256) de tube comprend au moins un élément d'accroche (60 ; 260) de tube, l'élément d'accroche de tube (60 ; 260) faisant saillie de la partie de fixation (56 ; 256) de tube avec un bord libre (61 ; 260) faisant face à la face interne (54 ; 254) d'extrémité longitudinale, et dans lequel le au moins un élément d'accroche (60) de tube est une patte flexible, avec une surface interne (62) d'accroche présentant un profil apte à pénétrer de manière irréversible dans une couche extérieure de tube,
- un élément de verrouillage (40) positionné sur le au moins un élément de douille (50), dans lequel l'élément de verrouillage (40) est apte à passer d'une position de repos, dans laquelle l'élément de verrouillage est positionné sur le au moins un élément de douille (50) sans déformation sensible du au moins un élément d'accroche (60) de tube, à une position de verrouillage, dans lequel l'élément de verrouillage (40) appuie radialement sur le au moins un élément d'accroche (60) de tube, de sorte que le au moins un élément d'accroche de tube est déformé vers le centre du raccord, pour passer en position d'accroche, l'élément de verrouillage (40) étant en position de repos,
- faire passer l'élément de verrouillage (40) en position de verrouillage, afin que le au moins un élément d'accroche (60) de tube vienne en position d'accroche dans laquelle l'élément d'accroche de tube est en engagement dans l'élément de tube par compression radiale de l'élément de verrouillage sur le au moins un élément d'accroche de tube, le profil de la surface interne du au moins un élément d'accroche (60) pénétrant dans une couche extérieure de tube.

2. Procédé de raccordement selon la revendication 1, dans lequel l'étape de faire passer l'élément de verrouillage (40) en position de verrouillage comprend une rotation de l'élément de verrouillage par rapport audit au moins un élément de douille.

3. Procédé de raccordement selon la revendication 1 ou 2dans lequel l'engagement de l'élément d'accroche (60) dans l'élément de tube est irréversible.

## Patentansprüche

1. Verfahren zum Verbinden eines Fittings mit einem Rohrelement, umfassend die Schritte
- Einsetzen eines Rohrelements (2) in ein Fitting (1), das Fitting umfassend
- einen Fittingkörper (3), mindestens ein Hülsenelement (50), umfassend einen Hülsenelementkörper (52; 252), wobei der mindestens eine Hülsenelementkörper auf dem Fittingkörper montiert ist, und wobei der Hülsenelementkörper (52) einen Rohrbefestigungsabschnitt (56; 256) mit einem Rohrelement-Längseinführende (56a) und einen Montageabschnitt (53; 253) aufweist, in Längsrichtung vom Einführende beabstandet, wobei der Montageabschnitt (53; 253) eine Längsend-Innenfläche (54; 254) aufweist, wobei der Rohrbefestigungsabschnitt (56; 256) mindestens ein Rohreingriffselement (60; 260) umfasst, wobei das Rohreingriffselement (60; 260) der Längsend-Innenfläche (54; 254) zugewandt von dem Rohrbefestigungsabschnitt (56; 256) mit einer freien Kante (61; 260) vorsteht, und wobei das mindestens eine Rohreingriffselement (60) eine flexible Lasche ist, mit einer Rohreingriffselementinnenfläche (62), ein Profil aufweisend, das in der Lage ist, in eine äußere Rohrschicht irreversibel einzudringen,
- ein Verriegelungselement (40), das auf dem mindestens einen Hülsenelement (50) positioniert ist, wobei das Verriegelungselement (40) angepasst ist, um sich von einer Ruheposition, in der das Verriegelungselement auf dem mindestens einen Hülsenelement (50) ohne signifikante Verformung des mindestens einen Rohreingriffselementes (60) angeordnet ist, in eine Verriegelungsposition zu bewegen, in der das Verriegelungselement (40) radial das mindestens eine Rohreingriffselement (60) beaufschlagt, so dass das mindestens eine Rohreingriffselement zur Mitte des Fittings hin verformt ist/wird, um sich in Eingriffsposition zu bewegen, wobei sich das Verriegelungselement (40) in der Ruheposition befindet,
- Überführen des Verriegelungselementes (40) in die Verriegelungsposition, damit das mindestens eine Rohreingriffselement (60) in Eingriffsposition gelang, in welcher das Rohreingriffselement durch radiale Kompression des Verriegelungselementes auf das mindestens eine Rohreingriffselement in das Rohrelement eingreift, wobei das Profil der Innenfläche des mindestens einen Rohreingriffselementes (60) in eine äußere Rohrschicht eindringt.

2. Verfahren zum Verbinden nach Anspruch 1, bei dem der Schritt des Überführens des Verriegelungselementes (40) in der Verriegelungsposition eine Drehung des Verriegelungselements in Bezug auf das mindestens eine Hülsenelement umfasst.

3. Verfahren zum Verbinden nach Anspruch 1 oder 2, bei dem das Eingreifen des Rohreingriffselementes (60) in das Rohrelement irreversibel ist.

## Claims

1. Method of connecting a fitting to a tube element, comprising the steps of
- inserting a tube element (2) into a fitting (1), the fitting comprising
- a fitting body (3), at least one bushing member (50) comprising a bushing member body (52; 252), the at least one bushing member body being mounted on the fitting body, and the bushing member body (52) having a tube fixing portion (56; 256) with a longitudinal insertion end (56a) for a tube element, and a mounting portion (53; 253) at longitudinal distance from the insertion end, the mounting portion (53; 253) having a longitudinal end inner face (54 ; 254), wherein the tube fixing portion (56; 256) comprises at least one tube hooking member (60; 260), the tube hooking member (60; 260) projecting from the tube fixing portion (56; 256) with a free edge (61; 260) facing the longitudinal end inner face (54; 254), and wherein the at least one tube hooking member (60) is a flexible tab, with an inner hooking surface (62) having a profile capable of irreversibly penetrating into a tube outer layer,
- a locking member (40) positioned on the at least one bushing member (50), wherein the locking member (40) is adapted to move from a rest position, in which the locking member is positioned on the at least one bushing member (50) without significant deformation of the at least one tube hooking member (60), to a locking position, in which the locking member (40) presses radially against the at least one tube hooking member (60), so that the at least one tube hooking member is deformed towards the center of the fitting, to move into a hooking position, the locking member (40) being in the rest position,
- moving the locking member (40) into the locking position, so that the at least one tube hooking member (60) comes into the hooking position in which the tube hooking member is engaged in the tube element by radial compression of the locking member on the at least one tube hooking member, the inner surface profile of the at least one hooking member (60) penetrating into a tube outer layer.

2. A method of connecting according to claim 1, wherein the step of moving the locking member (40) to the locking position comprises rotating the locking member with respect to said at least one bushing member.

3. A method of connecting according to claim 1 or 2, wherein the engagement of the hooking member (60) in the tube element is irreversible.
